(19) Europäisches Patentamt
European Patent Office
Office européen des brevets

(11) **EP 2 261 093 B1**

(12) **EUROPEAN PATENT SPECIFICATION**

(45) Date of publication and mention
of the grant of the patent:
**25.05.2016  Bulletin 2016/21**

(51) Int Cl.:
***B60T 8/1755*** (2006.01)

(21) Application number: **09161613.6**

(22) Date of filing: **01.06.2009**

(54) **Method and system for predictive yaw stability control for automobile**

Verfahren und System zur prädiktiven Regelung des Gierverhaltens eines Fahrzeugs

Procédé et système pour le contrôle de stabilité de lacet prédictif pour véhicule automobile

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**15.12.2010  Bulletin 2010/50**

(73) Proprietor: **Volvo Car Corporation**
**405 31 Göteborg (SE)**

(72) Inventors:
• **Ali, Mohammad**
**42443, Göteborg (SE)**
• **Olsson, Claes**
**41105, Göteborg (SE)**
• **Sjöberg, Jonas**
**43169, Mölndal (SE)**

(74) Representative: **Widahl, Jenny Marie**
**Volvo Car Corporation**
**50094 Intellectual Property**
**VAK-HBBVN**
**40531 Göteborg (SE)**

(56) References cited:
WO-A-2004/110809    DE-A1-102004 022 924
JP-A- 2000 033 860    US-A1- 2004 193 347

**Description**

**Method and system for predictive yaw stability control**

**Technical field**

The present invention relates to a method of predictive yaw stability control of a vehicle in accordance with the preamble of claim 1.

The present invention also relates to a system of predictive yaw stability control of a vehicle in accordance with the preamble of claim 4.

**Background of the invention**

According to recent studies, in motorized countries about half of all fatal accidents are single vehicle crashes. Studies also show that unintentional roadway departures accounts for the highest share of these traffic related fatalities.

The automotive industry has developed active safety systems that aim to prevent or mitigate accidents. One example is yaw stability control systems that assist the driver in regaining control of the vehicle (as disclosed for example in patent application document DE 10 2004 022 924 A1). Yaw stability control systems have proven to be very efficient in reducing the amount of fatalities in traffic.

In understeer, a conventional yaw stability control system typically applies the brake of the inner rear wheel of a vehicle in order to generate additional yaw moment. However, the available friction force in such a situation is low between the inner rear wheel and the road since much of the vehicle's weight is redistributed to the outer side. The influence of the brake intervention is thus limited and if the understeer is severe, available brake force may not be sufficient to keep the vehicle on the road.

Furthermore, if the driver of a vehicle equipped with a conventional yaw stability control system does not behave well, due to e.g. panic, the vehicle may leave the road, as it is common that vehicle motion reaches the limit of adhesion between tyre and road due to panic reactions of the driver.

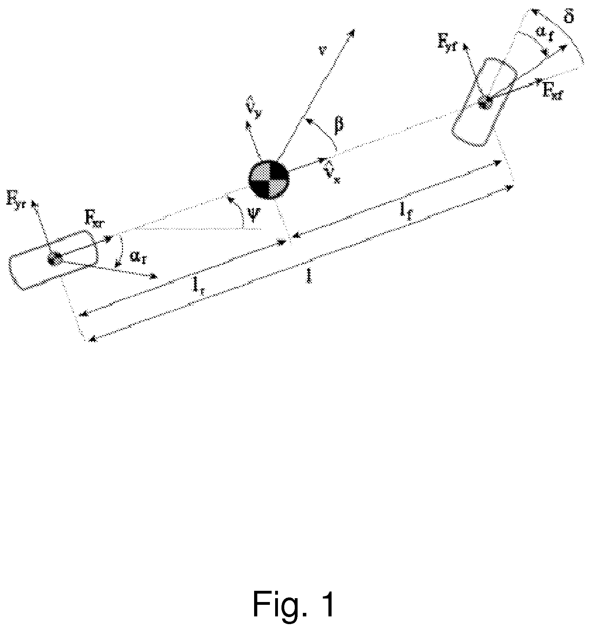

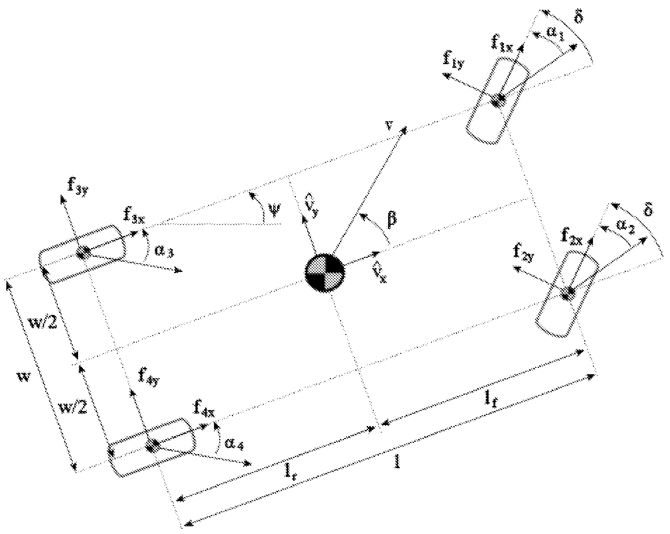

In conventional yaw stability control systems loss of control may be identified by e.g. considering the vehicle slip angle $\beta$. The slip angle $\beta$ is illustrated in figure 1, which shows a single track vehicle model, and is defined as the angle of the velocity vector in the vehicle's coordinate system. If the slip angle $\beta$ is large, turning the steering wheel will create little or no yaw moment on the vehicle. The possibility to control the vehicle through the steering wheel will then be limited. One of the main tasks of a yaw stability control system is thus to make sure that the slip angle $\beta$ remains low. How low it needs to be depends on available friction, in general it may be said that a higher slip angle $\beta$ may be allowed if much friction is available.

Unfortunately it is normally not possible to measure the slip angle $\beta$ with sensors available in conventional vehicles. Estimation algorithms may be useful in special conditions like e.g. during full braking, however in the general case, estimation of the slip angle $\beta$ may be quite uncertain.

Another measure is therefore used in conventional yaw stability control systems that consider the vehicle's yaw rate to identify when the driver has lost control and needs assistance. This measure, or the threat assessment and control principle that is based on it, may be viewed in different ways. The threat assessment may e.g. be seen as a comparison between the vehicle's actual trajectory and an interpretation of the trajectory that the driver intends to follow. If the difference between the driver's intentions and the vehicle's actual movement becomes too large the system decides to assist the driver in following the intended trajectory.

Interpretation of the driver's intentions is done by feeding the driver's input, i.e. steering angle through a simplified vehicle model with the assumption that it corresponds to the driver's perception of a vehicle's behavior. The simplified vehicle model that is used to compute the intended, or equivalently the reference trajectory in conventional yaw stability control systems is normally a single track vehicle model, according to figure 1. In the simplified model the lateral tyre force at each tyre is approximated to be linearly related to the tyre slip angle, $\alpha$. With this view, one may say that the conventional yaw stability control system aims at making the car follow the driver's intentions.

**Summary of the invention**

One object of the invention is to provide an improved method of predictive yaw stability control of a vehicle.

This object is achieved by the method as claimed in claim 1.

Thanks to the provision of the steps of: initiating simulation starting from a measured state of the vehicle at that specific time instant; acquiring information on the road ahead to be travelled during a predetermined time period; simulating the vehicle's motion along a future path on the road ahead during the predefined time period; calculating one or more indicators of the vehicles predicted yaw stability during the simulated motion along the future path on the road ahead during the predefined time period; evaluating the calculated indicators to establish if the vehicle is about to lose control; and, if established that the vehicle is about to lose control, signaling this to an on-board yaw stability system, a method is provided which allows for earlier intervention by the yaw stability control system, or to prepare vehicle actuators for intervention using the yaw stability control system.

A further object of the invention is to provide an improved system of predictive yaw stability control of a vehicle.

This object is achieved by the system as claimed in claim 4.

Thanks to the provision of: means for initiating simulation starting from a measured state of the vehicle at that specific time instant; means for acquiring information on the road ahead to be travelled during a predetermined time period; means for simulating the vehicle's motion along a future path on the road ahead during the predefined time period; means for calculating one or more indicators of the vehicles predicted yaw stability during the simulated motion along the future path on the road ahead during the predefined time period; means for evaluating the calculated indicators to establish if the vehicle is about to lose control; and, means for, if established that the vehicle is about to lose control, signaling this to an on-board yaw stability system, an improved system is provided which allows for earlier intervention by the yaw stability control system, or to prepare vehicle actuators for intervention using the yaw stability control system.

Preferred embodiments are listed in the dependent claims.

## Description of drawings

In the following, the invention will be described in greater detail by way of example only with reference to attached drawings, in which

Fig. 1 is a schematic illustration of a single track vehicle model,

Fig. 2 illustrates schematically a first part of a double track vehicle model, with static load transfer, and

Fig. 3 illustrates schematically a second part of a double track vehicle model, with static load transfer,

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein.

## Description of embodiments

The present invention relates to the possibility of predicting vehicle loss of control using information about the host vehicle's state and the road ahead. Information about the host vehicle's state is provided through measurements by on-board systems and sensors providing information on e.g. the host vehicle's speed and yaw rate. Information regarding the road ahead, i.e. the future geometrical path of the road, may be acquired from on-board systems, e.g. sensor systems such as vision systems (cameras), LIDAR (Light Detection And Ranging) systems, RADAR (RAdio Detection And Ranging) systems and/or from digital map systems such as a GPS system (Global Positioning System) or similar.

Utilization of a threat assessment algorithm is proposed, using which it is possible to predict e.g. powerful oversteer and/or understeer situations. The proposed threat assessment algorithm is also less dependant on the driver's skills than prior art conventional yaw stability control systems.

Predicting e.g. understeer before it actually occurs enables the possibility of earlier intervention, or to prepare vehicle actuators for an intervention using a conventional yaw stability control system. Issuing an intervention a little bit earlier might make the difference, so that the vehicle maintains control and stays on the road instead of running of the road in a fatal or severe accident. E.g. if brake intervention is issued earlier, before available friction at an inner rear wheel is reduced, it will have a more significant effect and will thus increase the possibility for the vehicle to stay on the road.

Over and understeer situations are results of vehicle state, vehicle properties and driver behavior. When the over or understeer becomes large enough, drivers are normally disturbed. As the over or understeer grows and becomes more evident, normal drivers will feel that they are not able to control their vehicle. If the vehicle is equipped with a yaw stability control system it will issue an intervention that assists the drivers and helps them regain control. These situations occur when the vehicle is operated in the region where the tyre forces nonlinear characteristics become evident. Such situations, in which maneuverability of the vehicle is reduced, are referred to herein as situations where the driver has lost control. This means that in a situation where the vehicle is driven in the nonlinear region of the tyres, the driver is considered to have lost control, even if the driver is skilled and has intentionally provoked the situation.

In order to address limitations in conventional yaw stability control, utilization of an algorithm based on predictions that assess whether the vehicle is about to lose control within a predetermined time horizon or time period is proposed. This is done by simulating the vehicles motion along its future path and evaluating key indicators in order to assess the vehicles yaw stability.

An indicator that is interesting to evaluate is e.g. the predicted difference $\Delta\dot{\psi}$ between a reference yaw rate $\dot{\psi}_{ref}$ and the vehicles predicted yaw rate $\dot{\psi}$, i.e. $\Delta\dot{\psi} = \dot{\psi}_{ref} - \dot{\psi}$.

The reference yaw rate $\dot{\psi}_{ref}$ is acquired through feeding the steering input $\delta$ through a single track vehicle model, se e.g. figure 1. The calculation of the reference yaw rate $\dot{\psi}_{ref}$ may be performed in the same manner as in conventional yaw control systems.

The predicted yaw rate $\dot{\psi}$ is acquired by simulating the vehicle's motion with a more detailed vehicle model as compared to the single track vehicle model used in conventional yaw control.

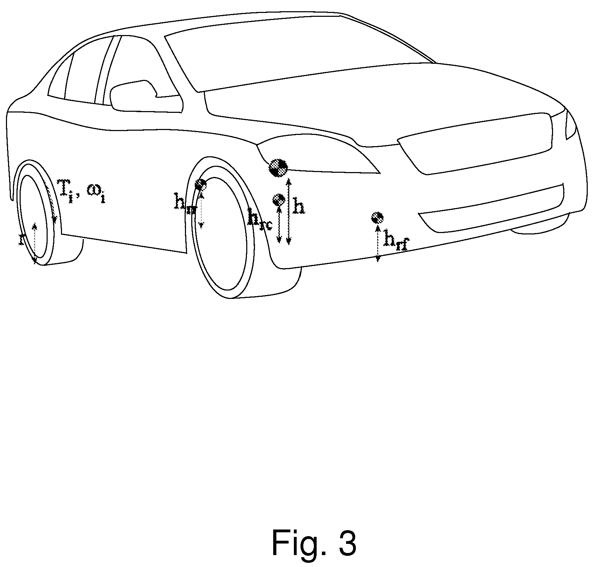

The level of detail in the modeled vehicle dynamics needs to be high enough to capture relevant information about the stability of the vehicle. The model used here is a double track vehicle model, with static load transfer, as illustrated in figures 2 and 3. However, any vehicle model providing a sufficient level of detail in the modeled vehicle dynamics to capture relevant information about the stability of the vehicle may be used.

The dynamic equations of motion for a double track vehicle model are:

$$\ddot{\psi} = \frac{1}{J_z}\left[\left(-F_{x1} + F_{x2} - F_{x3} + F_{x4}\right)\frac{w}{2} + \left(F_{y1} + F_{y2}\right)l_f - \left(F_{y3} + F_{y4}\right)l_r\right]$$

$$\dot{v}_x = \left(F_{x1} + F_{x2} + F_{x3} + F_{x4}\right)\frac{1}{m} + \dot{\psi}v_y$$

$$\dot{v}_y = \left(F_{y1} + F_{y2} + F_{y3} + F_{y4}\right)\frac{1}{m} - \dot{\psi}v_x$$

$$\dot{\omega}_i = \left(T_i - f_{xi}r\right)\frac{1}{J_\omega} \qquad i = 1,2,3,4$$

Where $J_\omega$ is the wheel inertia and the rest of the notation is defined according to figures 2 and 3. The forces denoted $f$ are expressed in the tyres coordinate system while they are denoted $F$ when expressed in the vehicle frame. The forces are calculated in the tyres coordinate system and a coordinate transformation is applied when they are expressed in the vehicle frame. In the above equations the self aligning torque is neglected.

The magic tyre formula, well known to the person skilled in the art, is used to calculate the tyre forces. In its general form the formula may be expressed:

$$Y(x) = D\sin\left[C\arctan\left\{Bx - E\left(Bx - \arctan\left(Bx\right)\right)\right\}\right]$$

with $Y$ as either longitudinal or lateral tyre force and $X$ as either longitudinal or lateral slip. The formula is a curve fitting and $B$, $C$, $D$ and $E$ are non dimensional parameters that depend on the vertical load. Using the magic tyre formula the forces are calculated for pure slip conditions, i.e. the interaction of lateral and longitudinal force is neglected. The combined slip effects are therefore taken into account according to:

$$f_x = f_{x0}G_{x\alpha}\left(\alpha, \kappa, F_z\right)$$

$$f_y = f_{y0}G_{x\kappa}\left(\alpha, \kappa, F_z\right) + S_{Vy\kappa}$$

With $f_{x0}$, $f_{y0}$ as the tyre forces under pure slip conditions, $G_{x\alpha}$, $G_{x\kappa}$ as weighting functions, $S_{Vy\kappa}$ the $\kappa$-induced

slip force and $f_x$, $f_y$ as the tyre forces under combined slip conditions. The influence of the camber angle is not taken into account.

The vertical load or normal force at each tyre is calculated according to:

$$F_{z1} = \frac{mgl_r}{2l} - \frac{\Delta F_{z_{long}}}{2} - \frac{\Delta F_{zf_{lat}}}{2}$$

$$F_{z2} = \frac{mgl_r}{2l} - \frac{\Delta F_{z_{long}}}{2} + \frac{\Delta F_{zf_{lat}}}{2}$$

$$F_{z3} = \frac{mgl_f}{2l} + \frac{\Delta F_{z_{long}}}{2} - \frac{\Delta F_{zr_{lat}}}{2}$$

$$F_{z4} = \frac{mgl_f}{2l} + \frac{\Delta F_{z_{long}}}{2} + \frac{\Delta F_{zr_{lat}}}{2}$$

where g denotes gravitational acceleration, $\Delta F_{z_{long}}$ denotes longitudinal load transfer and $\Delta F_{zf_{lat}}, \Delta F_{zr_{lat}}$ denotes lateral load transfer. The load transfer is calculated using a static relation as:

$$\Delta F_{z_{long}} = \frac{(T_1 + T_2 + T_3 + T_4)h}{rl}$$

$$\Delta F_{zf_{lat}} = \frac{\dot{\psi} v_x m}{w}\left(\frac{h_{rf} l_r}{l} + R_{sf}(h - h_{rc})\right)$$

$$\Delta F_{zr_{lat}} = \frac{\dot{\psi} v_x m}{w}\left(\frac{h_{rr} l_f}{l} + R_{sr}(h - h_{rc})\right)$$

with $R_{sf}$ and $R_{sr}$ as the roll stiffness distribution at the front and rear axles and the rest of the notation according to figures 2 and 3. The tyre loads are calculated assuming a fix position of the roll axis, a constant roll stiffness distribution and an infinitely stiff chassis.

The lateral slip angles are calculated as:

$$\alpha_1 = \frac{v_y + l_f \dot{\psi}}{v_x - \frac{w}{2}\dot{\psi}} - \delta$$

$$\alpha_2 = \frac{v_y + l_f \dot{\psi}}{v_x + \frac{w}{2}\dot{\psi}} - \delta$$

$$\alpha_3 = \frac{v_y - l_r \dot{\psi}}{v_x - \frac{w}{2}\dot{\psi}}$$

$$\alpha_4 = \frac{v_y - l_r \dot{\psi}}{v_x + \frac{w}{2}\dot{\psi}}$$

and finally the longitudinal slip ratios may be expressed:

$$\kappa_i = -\left(1 - \frac{\omega_i r}{v_x + \frac{w}{2}\dot{\psi}}\right) \qquad i = 1,2,3,4$$

A large value for the predicted difference $\Delta\dot{\psi}$ between a reference yaw rate $\dot{\psi}_{ref}$ and the vehicles predicted yaw rate $\dot{\psi}$ is acquired when loss of control is predicted. This happens when the vehicle is operated in the nonlinear region of the tyres. By considering the maximum predicted difference $\Delta\dot{\psi}_{max}$ between a reference yaw rate $\dot{\psi}_{ref}$ and the vehicles predicted yaw rate $\dot{\psi}$ as an indicator an assessment is made of whether loss of control is imminent. The threshold value for the maximum predicted difference $\Delta\dot{\psi}_{max}$ between a reference yaw rate $\dot{\psi}_{ref}$ and the vehicles predicted yaw rate $\dot{\psi}$ may be set through tuning.

However, even if full measurements of the vehicle's state and the geometry of the road would be known, there will still be an uncertainty about the driver's future behavior. In a situation where a vehicle is e.g. approaching a curve at high speed, it is difficult for an active safety system to know whether the driver intends to slow down before entering the curve. In order to be able to simulate the vehicle's future motion the assumptions are made such that the driver tries to stay on the road without losing control. The driver's behavior is therefore modeled as follows.

The drivers control inputs are considered to be the wheel angle at the front wheels $\delta$ and applied wheel torque T. In a conventional vehicle the driver applies brake torque via a brake pedal, the wheel torque T is therefore distributed with a fixed ratio between the front and the rear wheels.

In alignment with the assumption that the driver tries to avoid losing control, in each simulation brake torque is applied so that the vehicle's speed is reduced. Since the tyres are much easier to stop than the vehicle, applying too much torque in an uncontrolled manner might result in locking the wheels without stopping the vehicle. In most modern cars this would cause the ABS system (Anti-lock Braking System) to intervene. In order to avoid this, the braking behavior of the driver is modeled as a PI controller with torque, T as the control signal and desired longitudinal slip, $\kappa$ as reference.

The control error is defined as the difference between the reference slip and the slip at the wheel that has least vertical load. This is because the wheel with least vertical load is also the wheel where the absolute value of the longitudinal slip is largest, the longitudinal slip at the other wheels will thus have a lower absolute value. By introducing the PI controller, vehicle speed may be smoothly reduced without locking any of the wheels.

The longitudinal slip reference is chosen so that it is high enough for the velocity to be reduced but not so high that the braking has a too significant impact on the acquired side force when cornering. The choice of longitudinal slip reference is thus the result of a balancing between reducing velocity and maintaining side force. The optimal choice depends on the situation and is normally subject to tuning. A system for assessing the driver whilst driving for providing the longitudinal slip reference may be provided.

The steering behavior of the driver on the other hand is modeled as a PID controller, with front wheel angle, $\delta$ as control signal and the future geometrical path as reference. The control error is defined as the distance between the vehicle's center of gravity and the reference.

With the above assumptions, the proposed algorithms is thus to simulate the vehicles future motion at each time sample and repeat the simulation with a predefined time interval. Each simulation is initiated with the measured state of the vehicle at that specific time instant. As part of each simulation the maximum predicted difference $\Delta\dot{\psi}_{max}$ between a reference yaw rate $\dot{\psi}_{ref}$ and the vehicles predicted yaw rate $\dot{\psi}$ is calculated, evaluated and an assessment is made of whether the vehicle is about to lose control or not.

The proposed algorithm has been verified through experimental testing on a test track. It has been verified that the algorithm predicts understeer situations well before they occur. The value of the indicator $\Delta\dot{\psi}_{max}$, i.e. the maximum predicted difference between a reference yaw rate $\dot{\psi}_{ref}$ and the vehicles predicted yaw rate $\dot{\psi}$, is increased when an understeer is imminent. In addition it has been found that this value remains low when no loss of control is in range.

Thus, it has been shown that powerful understeer may be predicted, using relatively simple assumptions about a drivers future behaviour if the future geometrical path of the vehicle is known.

The information from the proposed algorithm may be used in several ways. The indicator $\Delta\dot{\psi}_{max}$ may be used to issue interventions by a separate yaw controller or as a weighted part in the control error of a conventional yaw stability system. A simple thing such as having the brakes prepared when the conventional yaw control decides to intervene might save enough time, e.g. 300ms, to make the difference between ending up in a severe accident or staying on the road.

The future geometrical path of the vehicle may be predefined. In practice however this is not the case and one may instead assume that the driver tries to follow the middle of the lane. If the lane is not particularly wide this is a good approximation since the possible variations in the vehicles path while staying in the lane is small.

For wide roads additional assumptions may be made about the driver's behavior. The driver may be assumed to be skilled and cuts the curves.

Another approach is to assume an optimal driver. Assuming an optimal driver leads to quite conservative simulations that will predict loss of control only once it has become inevitable with the control possibilities available for the driver. Depending on the type of intervention that is intended the conservative approach might or might not be beneficial.

For less severe interventions like preparing the brakes, controlling the vehicles speed by means of brakes or throttle and even using the brakes to create additional yaw moment the conservativeness is not as critical.

The thresholds for when a system based on the proposed method should intervene is a parameter that may be subject to tuning in the balancing of not failing to predict loss of control when it occurs, while avoiding false alarms.

Several thresholds may be defined, in which the severity if the intervention issued by such a system is gradually increased.

The friction coefficient $\mu$ is an important parameter, especially since it is on slippery roads that the proposed indicator is envisioned to have the greatest benefit. Thus, a friction estimator should preferably be available allowing for the friction to be known, at least at the point where the simulation is started.

Thus, in accordance with the present invention a method of predictive yaw stability control of a vehicle is suggested. Simulation is initiated starting from a measured state of the vehicle at that specific time instant, which information may be provided through measurements by on-board systems and sensors providing information on e.g. vehicle speed and vehicle yaw rate.

Information is acquired on the road ahead to be travelled during a predetermined time period, which time period should be of sufficient length to allow for preemptive yaw stability actions, e.g. up to approximately two seconds.

In one embodiment the step of acquiring information on the road ahead to be travelled during the predetermined time period comprises acquiring information from at least one of the following on-board systems: a vision system, a Light Detection And Ranging system, a RAdio Detection And Ranging system, and a digital map system.

The vehicle's motion along a future path on the road ahead during the predefined time period is simulated.

In one embodiment the step of simulating the vehicle's motion along a future path on the road ahead during the predefined time period comprises using a driver model for modeling the driver behavior when driving the future path on the road ahead during the predefined time period. The drivers control inputs are considered to be the wheel angle at the front wheels $\delta$ and applied wheel torque $T$, the braking behavior of the driver may be modeled as a PI controller with torque, $T$ as the control signal and desired longitudinal slip, $\kappa$ as reference, and the steering behavior of the driver may be modeled as a PID controller, with front wheel angle, $\delta$ as control signal and the future geometrical path as reference.

In the above embodiment the step of simulating the vehicle's motion along a future path on the road ahead during the predefined time period further comprises using a vehicle model for modeling the vehicles yaw stability when driven the future path on the road ahead by the driver model during the predefined time period. The vehicle model level of detail in the modeled vehicle dynamics needs to be high enough to capture relevant information about the stability of the vehicle. In one embodiment it is suggested to use a double track vehicle model, with static load transfer. However, any vehicle model providing a sufficient level of detail in the modeled vehicle dynamics to capture relevant information about the stability of the vehicle may be used.

One or more indicators of the vehicles predicted yaw stability during the simulated motion along the future path on the road ahead during the predefined time period are calculated.

In one embodiment the step of calculating one or more indicators of the vehicles predicted yaw stability during the simulated motion along the future path on the road ahead during the predefined time period comprises calculating the maximum predicted difference ($\Delta\dot{\psi}_{max}$) between a reference yaw rate ($\dot{\psi}_{ref}$) and the vehicles predicted yaw rate ($\dot{\psi}$), as described above.

The calculated indicators are evaluated to establish if the vehicle is about to lose control.

In one embodiment the maximum predicted difference ($\Delta\dot{\psi}_{max}$) between a reference yaw rate ($\dot{\psi}_{ref}$) and the vehicles predicted yaw rate ($\dot{\psi}$) is compared to a threshold, which threshold has been previously established through tuning.

If established that the vehicle is about to lose control, this is signaled to an on-board yaw stability system. Upon receipt of such signaling that the vehicle is about to lose control, the on-board yaw stability system may either take moderate action, such as e.g. prepare the brakes for intervention or take immediate action, such as e.g. controlling the vehicles speed by means of brakes or throttle or use the brakes to create additional yaw moment. The signaled information may be used to issue interventions by a separate yaw controller or as a weighted part in the control error of a conventional yaw stability system.

The present invention also relates to a system of predictive yaw stability control of a vehicle as described above and comprising means for performing the above described steps.

In one embodiment the means for acquiring information on the road ahead to be travelled during the predetermined time period comprises at least one of the following on-board systems: a vision system, a Light Detection And Ranging system, a RAdio Detection And Ranging system, and a digital map system.

The means for simulating the vehicle's motion along a future path on the road ahead during the predefined time period may be implemented as the execution of software on an on-board processing unit of a vehicle yaw stability system. These means comprises a driver model for modeling the driver behavior when driving the future path on the road ahead during the predefined time period, as well as a vehicle model for modeling the vehicles yaw stability when driven the future path on the road ahead by the driver model during the predefined time period.

Also the means for calculating one or more indicators of the vehicles predicted yaw stability during the simulated motion along the future path on the road ahead during the predefined time period may be implemented as the execution of software on an on-board processing unit of a vehicle yaw stability system. This on-board processing unit may be arranged to calculate the maximum predicted difference ($\Delta\dot{\psi}_{max}$) between a reference yaw rate ($\dot{\psi}_{ref}$) and the vehicles predicted yaw rate ($\dot{\psi}$).

The present invention also relates to an automotive vehicle comprising a system of predictive yaw stability control of a vehicle as described above.

The invention is not limited to the above-described embodiments, but may be varied within the scope of the following claims.

**Claims**

1. A method of predictive yaw stability control of a vehicle, **characterized in that** it comprises the steps of:

   initiating simulation starting from a measured state of the vehicle at that specific time instant;
   acquiring information on the road ahead to be travelled during a predetermined time period;
   simulating the vehicle's motion along a future path on the road ahead during the predefined time period;
   calculating one or more indicators of the vehicles predicted yaw stability during the simulated motion along the future path on the road ahead during the predefined time period;
   evaluating the calculated indicators to establish if the vehicle is about to lose control;
   if established that the vehicle is about to lose control, signaling this to an on-board yaw stability system,

   wherein the step of simulating the vehicle's motion along a future path on the road ahead during the predefined time period comprises: using a driver model for modeling the driver behavior when driving the future path on the road ahead during the predefined time period; using a vehicle model for modeling the vehicles yaw stability when driven the future path on the road ahead by the driver model during the predefined time period.

2. A method according to claim 1,
   **characterized in that**:

   the step of acquiring information on the road ahead to be travelled during the predetermined time period comprises acquiring information from at least one of the following on-board systems: a vision system, a Light Detection And Ranging system, a RAdio Detection And Ranging system, and a digital map system.

3. A method according to any one of claims 1 to 2
   **characterized in that**:

   the step of calculating one or more indicators of the vehicles predicted yaw stability during the simulated motion along the future path on the road ahead during the predefined time period comprises calculating the maximum predicted difference ($\Delta\dot{\psi}_{max}$) between a reference yaw rate ($\dot{\psi}_{ref}$) and the vehicles predicted yaw rate ($\dot{\psi}$).

4. A system of predictive yaw stability control of a vehicle, **characterized in that** it comprises:

   means for initiating simulation starting from a measured state of the vehicle at that specific time instant;
   means for acquiring information on the road ahead to be travelled during a predetermined time period;
   means for simulating the vehicle's motion along a future path on the road ahead during the predefined time period;

means for calculating one or more indicators of the vehicles predicted yaw stability during the simulated motion along the future path on the road ahead during the predefined time period;

means for evaluating the calculated indicators to establish if the vehicle is about to lose control;

means for, if established that the vehicle is about to lose control, signaling this to an on-board yaw stability system,

wherein the means for simulating the vehicle's motion along a future path on the road ahead during the predefined time period comprises: a driver model for modeling the driver behavior when driving the future path on the road ahead during the predefined time period; a vehicle model for modeling the vehicles yaw stability when driven the future path on the road ahead by the driver model during the predefined time period

5. A system according to claims 4 **characterized in that**:

the means for acquiring information on the road ahead to be travelled during the predetermined time period comprises at least one of the following on-board systems: a vision system, a Light Detection And Ranging system, a RAdio Detection And Ranging system, and a digital map system.

6. A system according to claim 4,
**characterized in that**:

the means for calculating one or more indicators of the vehicles predicted yaw stability during the simulated motion along the future path on the road ahead during the predefined time period are arranged to calculate the maximum predicted difference ($\Delta\dot{\psi}_{max}$) between a reference yaw rate ($\dot{\psi}_{ref}$) and the vehicles predicted yaw rate ($\dot{\psi}$).

7. An automotive vehicle, **characterized in that** it comprises a system of predictive yaw stability control of a vehicle according to any one of claims 4 to 6.

**Patentansprüche**

1. Verfahren zur prädiktiven Regelung des Gierverhaltens eines Fahrzeugs, **dadurch gekennzeichnet, dass** es folgende Schritte umfasst:

Veranlassen einer Simulation ausgehend von einem gemessenen Zustand des Fahrzeugs zu dem betreffenden Zeitpunkt;

Beschaffen von Informationen zur vorausliegenden, zu befahrenden Straße während eines vorbestimmten Zeitraums;

Simulieren der Bewegung des Fahrzeugs entlang eines künftigen Weges auf der vorausliegenden Straße während des vorbestimmten Zeitraums;

Berechnen eines oder mehrerer Indikatoren des voraussichtlichen Gierverhaltens des Fahrzeugs während der simulierten Bewegung entlang des künftigen Weges auf der vorausliegenden Straße während des vorbestimmten Zeitraums;

Auswerten der berechneten Indikatoren, um zu bestimmen, ob das Fahrzeug außer Kontrolle zu geraten droht;

falls bestimmt wird, dass das Fahrzeug außer Kontrolle zu geraten droht, Signalisieren dieser Information an ein bordeigenes Gierstabilitätssystem, wobei der Schritt des Simulierens der Bewegung des Fahrzeugs entlang eines künftigen Weges auf der vorausliegenden Straße während des vorbestimmten Zeitraums umfasst:

Verwenden eines Fahrermodells zum Modellieren des Fahrerverhaltens bei der Fahrt entlang des künftigen Weges auf der vorausliegenden Straße während des vorbestimmten Zeitraums;

Verwenden eines Fahrzeugmodells zum Modellieren eines Gierverhaltens des Fahrzeugs bei der Fahrt entlang des künftigen Weges auf der vorausliegenden Straße durch das Fahrermodell während des vorbestimmten Zeitraums.

2. Verfahren gemäß Anspruch 1,
**dadurch gekennzeichnet, dass**:

der Schritt des Beschaffens von Informationen zur vorausliegenden, zu befahrenden Straße während des vorbestimmten Zeitraums umfasst, Informationen von wenigstens einem der folgenden bordeigenen Systeme zu beschaffen: einem Sichtsystem, einem LIDAR-System (Light Detection And Ranging, Lichtortung und -entfernungsmessung), einem RADAR-System (RAdio Detection And Ranging, Funkortung und -entfernungsmessung) und einem digitalen Kartensystem.

**3.** Verfahren gemäß einem der Ansprüche 1 bis 2, **dadurch gekennzeichnet, dass**:

der Schritt des Berechnens eines oder mehrerer Indikatoren des voraussichtlichen Gierverhaltens des Fahrzeugs während der simulierten Bewegung entlang des künftigen Weges auf der vorausliegenden Straße während des vorbestimmten Zeitraums umfasst, die voraussichtliche maximale Differenz ($\Delta\psi_{max}$) zwischen einer Bezugsgierrate ($\psi_{ref}$) und der voraussichtlichen Gierrate ($\psi$) des Fahrzeugs zu berechnen.

**4.** System zur prädiktiven Regelung des Gierverhaltens eines Fahrzeugs, **dadurch gekennzeichnet, dass** es umfasst:

Mittel zum Veranlassen einer Simulation ausgehend von einem gemessenen Zustand des Fahrzeugs zu dem betreffenden Zeitpunkt;
Mittel zum Beschaffen von Informationen zur vorausliegenden, zu befahrenden Straße während eines vorbestimmten Zeitraums;
Mittel zum Simulieren der Bewegung des Fahrzeugs entlang eines künftigen Weges auf der vorausliegenden Straße während des vorbestimmten Zeitraums;
Mittel zum Berechnen eines oder mehrerer Indikatoren des voraussichtlichen Gierverhaltens des Fahrzeugs während der simulierten Bewegung entlang des künftigen Weges auf der vorausliegenden Straße während des vorbestimmten Zeitraums;
Mittel zum Auswerten der berechneten Indikatoren, um zu bestimmen, ob das Fahrzeug außer Kontrolle zu geraten droht;
falls bestimmt wird, dass das Fahrzeug außer Kontrolle zu geraten droht, Mittel zum Signalisieren dieser Information an ein bordeigenes Gierstabilitätssystem, wobei
das Mittel zum Simulieren der Bewegung des Fahrzeugs entlang eines künftigen Weges auf der vorausliegenden Straße während des vorbestimmten Zeitraums umfasst:

ein Fahrermodell zum Modellieren des Fahrerverhaltens bei der Fahrt entlang des künftigen Weges auf der vorausliegenden Straße während des vorbestimmten Zeitraums;
ein Fahrzeugmodell zum Modellieren eines Gierverhaltens des Fahrzeugs bei der Fahrt entlang des künftigen Weges auf der vorausliegenden Straße durch das Fahrermodell während des vorbestimmten Zeitraums.

**5.** System gemäß Anspruch 4,
**dadurch gekennzeichnet, dass**:

das Mittel zum Beschaffen von Informationen zur vorausliegenden, zu befahrenden Straße während des vorbestimmten Zeitraums wenigstens eines der folgenden bordeigenen Systeme umfasst: ein Sichtsystem, ein LIDAR-System (Light Detection And Ranging, Lichtortung und -entfernungsmessung), ein RADAR-System (RAdio Detection And Ranging, Funkortung und -entfernungsmessung) und ein digitales Kartensystem.

**6.** System gemäß Anspruch 4,
**dadurch gekennzeichnet, dass**:

die Mittel zum Berechnen eines oder mehrerer Indikatoren des voraussichtlichen Gierverhaltens des Fahrzeugs während der simulierten Bewegung entlang des künftigen Weges auf der vorausliegenden Straße während des vorbestimmten Zeitraums dafür ausgelegt sind, die voraussichtliche maximale Differenz ($\Delta\psi_{max}$) zwischen einer Bezugsgierrate ($\psi_{ref}$) und der voraussichtlichen Gierrate ($\psi$) des Fahrzeugs zu berechnen.

**7.** Kraftfahrzeug, **dadurch gekennzeichnet, dass** es ein System zur prädiktiven Regelung des Gierverhaltens eines Fahrzeugs gemäß einem der Ansprüche 4 bis 6 umfasst.

**Revendications**

**1.** Procédé de commande prédictive de stabilité en lacet **caractérisé en ce qu'**il comprend les étapes suivantes :

le lancement d'une simulation débutant à partir d'un état mesuré du véhicule à cet instant spécifique,

l'acquisition d'informations sur la route à parcourir pendant un intervalle de temps prédéterminé,

la simulation du mouvement du véhicule le long d'un trajet futur sur la route à parcourir pendant l'intervalle de temps prédéfini,

le calcul d'un ou de plusieurs indicateurs de stabilité en lacet prédite du véhicule pendant le mouvement simulé le long du futur trajet sur la route à parcourir pendant l'intervalle de temps prédéfini,

l'évaluation des indicateurs calculés pour établir si le véhicule est sur le point de perdre le contrôle,

la signalisation de ce fait à un système de stabilité en lacet embarqué, s'il est établi que le véhicule est sur le point de perdre le contrôle, dans lequel :

l'étape de simulation du mouvement du véhicule le long d'un trajet futur sur la route à parcourir pendant l'intervalle de temps prédéfini comprend :

l'utilisation d'un modèle de conducteur pour modéliser le comportement du conducteur lorsqu'il conduit sur le futur trajet sur la route à parcourir pendant l'intervalle de temps prédéfini,

l'utilisation d'un modèle de véhicule pour modéliser la stabilité en lacet du véhicule lorsqu'il est conduit sur le futur trajet sur la route à parcourir par le modèle de conducteur pendant l'intervalle de temps prédéfini.

2. Procédé selon la revendication 1, **caractérisé en ce que :**

l'étape acquisition d'informations sur la route à parcourir pendant l'intervalle de temps prédéterminé comprend l'acquisition d'informations provenant d'au moins l'un des systèmes embarqués suivants : un système de vision, un système de détection et de télémétrie lumineux, un système de détection et de télémétrie radio et un système de cartographie numérique.

3. Procédé selon l'une quelconque des revendications 1 et 2, **caractérisé en ce que :**

l'étape de calcul d'un ou plusieurs indicateurs de la stabilité en lacet prédite du véhicule pendant le mouvement simulé le long du futur trajet sur la route à parcourir pendant l'intervalle de temps prédéfini comprend le calcul de la différence prédite maximale ($\Delta\dot{\psi}_{max}$) entre une vitesse angulaire en lacet de référence ($\dot{\psi}_{ref}$) et la vitesse angulaire en lacet prédite du véhicule ($\dot{\psi}$).

4. Système de commande prédictive de stabilité en lacet d'un véhicule, **caractérisé en ce qu'**il comprend :

un moyen permettant de lancer une simulation débutant à partir d'un état mesuré du véhicule à cet instant spécifique,

un moyen permettant acquérir des informations sur la route à parcourir pendant un intervalle de temps prédéterminé,

un moyen permettant de simuler le mouvement du véhicule le long d'un trajet futur sur la route à parcourir pendant l'intervalle de temps prédéfini,

un moyen permettant calculer un ou plusieurs indicateurs de la stabilité en lacet prédite du véhicule pendant le mouvement simulé le long du futur trajet sur la route à parcourir pendant l'intervalle de temps prédéfini,

un moyen permettant d'évaluer les indicateurs calculés pour établir si le véhicule est sur le point de perdre le contrôle,

un moyen permettant de signaler ce fait à un système de stabilité en lacet embarqué, s'il est établi que le véhicule est sur le point de perdre le contrôle, dans lequel :

le moyen permettant de simuler le mouvement du véhicule le long d'un trajet futur sur la route à parcourir pendant l'intervalle de temps prédéfini comprend :

un modèle de conducteur destiné à modéliser le comportement du conducteur lorsqu'il conduit sur le futur trajet sur la route à parcourir pendant l'intervalle de temps prédéfini,

un modèle de véhicule destiné à modéliser la stabilité en lacet du véhicule lorsqu'il est conduit sur le futur trajet sur la route à parcourir par le modèle de conducteur pendant un intervalle de temps prédéfini.

**5.** Système selon la revendication 4,
**caractérisé en ce que** :

le moyen permettant d'acquérir des informations sur la route à parcourir pendant l'intervalle de temps prédéterminé comprend au moins l'un des systèmes embarqués suivants : un système de vision, un système de détection et de télémétrie lumineux, un système de détection et de télémétrie radio et un système de cartographie numérique.

**6.** Système selon la revendication 4,
**caractérisé en ce que** :

le moyen permettant de calculer un ou plusieurs indicateurs de la stabilité en lacet prédite du véhicule pendant le mouvement simulé le long du futur trajet sur la route à parcourir pendant l'intervalle de temps prédéfini est agencé pour calculer la différence prédite maximale ($\Delta \dot{\psi}_{max}$) entre une vitesse angulaire en lacet de référence ($\dot{\psi}_{ref}$) et la vitesse angulaire en lacet prédite du véhicule ($\dot{\psi}$).

**7.** Véhicule automobile, **caractérisé en ce qu'**il comprend un système de commande prédictive de stabilité en lacet d'un véhicule conforme à l'une quelconque des revendications 4 à 6.

Fig. 1

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102004022924 A1